(19) **Europäisches Patentamt**

**European Patent Office**

**Office européen des brevets**

(11) Veröffentlichungsnummer: **0 388 716 B1**

(12) **EUROPÄISCHE PATENTSCHRIFT**

(45) Veröffentlichungstag der Patentschrift: **15.12.93**

(51) Int. Cl.5: **C09J 123/14**, C09J 7/00, C09J 123/08, C09J 177/00

(21) Anmeldenummer: **90104418.0**

(22) Anmeldetag: **08.03.90**

(54) **Heissschmelzkleber-Zusammensetzungen.**

(30) Priorität: **18.03.89 DE 3908953**

(43) Veröffentlichungstag der Anmeldung:
**26.09.90 Patentblatt 90/39**

(45) Bekanntmachung des Hinweises auf die Patenterteilung:
**15.12.93 Patentblatt 93/50**

(84) Benannte Vertragsstaaten:
**AT BE CH DE DK ES FR GB GR IT LI LU NL SE**

(56) Entgegenhaltungen:
DE-A- 3 237 914
US-A- 4 727 120

(73) Patentinhaber: **Elf Atochem Deutschland GmbH**
**Uerdinger Strasse 5**
**D-40474 Düsseldorf(DE)**

(72) Erfinder: **Schulte, Ulrich**
**Nibelungen Weg 30**
**D-5000 Köln 50(DE)**
Erfinder: **Knipf, Helmut**
**Gärtnerstrasse 34**
**D-5353 Strempt Mechernich(DE)**
Erfinder: **Czerny, Rudolf**
**Heckenweg 16**
**D-5357 Swisttal-Heimerzheim(DE)**
Erfinder: **Schlesinger, Manfred**
**Kempensiefen 23**
**D-5358 Münstereifel-Wald(DE)**

(74) Vertreter: **Türk, Gille, Hrabal, Leifert**
**Brucknerstrasse 20**
**D-40593 Düsseldorf (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Heißschmelzkleber aus einer erstarrten Schmelze von Ethylen-Acrylsäure-Acrylester-Copolymeren und weiteren thermoplastischen Polymeren. Weiterhin betrifft die vorliegende Erfindung die Verwendung der Heißschmelzkleber-Zusammensetzungen zum Verkleben von insbesondere organischen Polymeren.

Der Einsatz von Heißschmelzklebstoffen zum Verkleben von Werkstoffen hat auf den verschiedensten Gebieten Bedeutung erlangt. Verstärkt wird in der Automobilindustrie der Einsatz von Klebstoffen zur Herstellung von Verbundteilen gefördert. Dabei werden die Klebstoffe zur Motorraumverkapselung zum Verkleben von in erster Linie mit einer Abschlußschicht beschichteten Schäumen mit Polypropylenträgern eingesetzt. Dabei wird aufgrund der im Motorraum herrschenden Temperaturen eine Wärmestandfestigkeit von 120°C gefordert.

Weiterhin werden in der Automobilindustrie Schmelzklebstoffe bei der Herstellung von Verbundteilen für den Kraftfahrzeuginnenraum benötigt. Zur Herstellung der dabei benötigten Verbundmaterialien Textil/Schaum erfolgt eine Verklebung auf geformte oder ungeformte Träger, die als Basis phenolharzgetränkte Holzmehlformteile oder verstärkte Polyolefine wie Glasfasermatten verstärktes Polypropylen aufweisen. Auch hierbei muß eine Wärmestandfestigkeit von 120°C, sowie eine Verformbarkeit des Verbundmaterials im Anschluß an den Klebevorgang gegeben sein. Weitere Anforderungen an die Klebstoffe sind Tiefziehfähigkeit der verklebten Verbunde, Beständigkeit der Klebstoffe gegen Weichmacher in den zu verklebenden Materialien, sowie optimale Adhäsion zu nicht beispielsweise durch Plasmaätzung oder Bestrahlung vorbehandelten Werkstoffen.

Um den vorgenannten Anforderungen zu genügen, sind bis jetzt verschiedene Versuche unternommen worden, Klebstoffe zur Herstellung von Verbundmaterialien bereit zu stellen. So beschreibt die DE-PS 27 01 431 die Verwendung einer Schmelzklebstoff-Folie auf Polyamidbasis zum Aufkleben von Überzugsmaterial aus Polyurethanschaumstoff für Kraftfahrzeug-Innenausstattungsmaterialien. Hierbei muß jedoch der Polyurethanschaumstoff mit einer PVC-Deckfolie beschichtet sein. Die Verwendung eines lösungsmittelhaltigen, aufstreichbaren Klebstoffes zur Herstellung von Verbundmaterialien wurde ebenfalls vorgenommen. Ein solcher Klebstoff hat jedoch den Nachteil, daß er ein Umweltgift darstellt und die Gesundheit des Menschen beeinträchtigt.

Zum Verkleben wurden auch Vinylfilme, wie z.B. solche aus einem Ethylen/Vinylacetat-Copolymerisat, und Polyolefin-Filme wie z.B. solche aus Polyethylen getestet. Hierbei hat sich jedoch gezeigt, daß solche Aufschmelzklebstoffe für Kraftfahrzeug-Innenausstattungsmaterialien ungeeignet sind, da diese den bei einer Temperatur von 80°C durchgeführten Wärmebeständigkeitstest nicht bestehen. Bei Verwendung von Ethylen/Vinylacetat-Copolymerisaten als Klebstoffe löst sich das Überzugsmaterial von der Unterlage bei dieser Temperatur aufgrund der schlechten Haftung des Copolymerisates ab.

Die Verwendung höherer Temperaturen wird durch die Art des zu verklebenden Materials eingeschränkt, da z.B. Laminate aus geschäumten Polyethylen oder geschäumten Polyurethanen beim Verkleben bei diesen Temperaturen beschädigt werden. Zum Verkleben von Metall und/oder Gummiteilen wurde wässrige Dispersionen für hochtemperaturbeständige Schmelzkleber auf Basis von Copolyamiden mit alkoxylierten Melaminharzen in der DE-OS 23 07 346 beschrieben.

Eine Heißschmelzkleberzusammensetzung aus einem Ethylenvinylacetat-Copolymeren, einem partiell verseiften Ethylenvinylacetat-Copolymerisats und einem Polyamidharzes zur Verklebung von Metallen oder Kunststoffen sind in der DE-OS 35 04 696 beschrieben. Diese Heißschmelzkleberzusammensetzung wird in Form einer Folie bereitgestellt.

Ebenfalls in Folienform wird in der EP-91 807 eine Heißschmelzkleberzusammensetzung aus einem Ethylen-Propylen-Copolymer, einem Maleinsäure-modifizierten Polyethylen, einem Polyethylen sowie einem klebrig-machenden Mittel und anorganischen Füllmaterialien zum Aufkleben einer Polyolefinbeschichtung beschrieben.

Weitere Heißschmelzkleberzusammensetzungen auf Polyethylen-, bzw. Polyethylencopolymer-Basis sind in der EP-94 991 und in der EP-101 028 beschrieben. Beide Heißschmelzkleberzusammensetzungen werden in Folienform bereitgestellt und zur Beschichtung von Verpackungsmaterialien verwendet.

Ein Polymersystem zur Verwendung als Klebstoff zum Verkleben von Textilmaterialien auf Basis eines ungepfropften Terpolymers aus Einheiten von Ethylen, Alkylacrylaten und einer ungesättigten Säure wird in der EP-164 179 beschrieben.

Den bis heute eingesetzten Heißschmelzklebstoffe ist jedoch zueigen, daß sie aufgrund ihrer speziellen Zusammensetzung nur für das Verkleben bestimmter Substrate geeignet sind und bei andersartigen Substraten nur mangelhafte Klebeeigenschaften zeigen. Bei den lösungsmittelhaltigen Klebstoffen treten aufgrund des Lösungsmittelgehaltes Umweltprobleme auf, daneben sind spezielle Applikationsverfahren und -geräte notwendig.

Um die Verklebung verschiedener Materialien mit leicht applizierbaren Klebstoffen zu ermöglichen, sind Mehrschicht-Folien entwickelt worden. Diese Mehrschicht-Folien sind jedoch nicht kostengünstig herzustellen und versagen nach Temperaturwechselbeanspruchung im Folienverbund.

Die Aufgabe der Erfindung bestand nun darin, ein Klebstoffsystem bereitzustellen, das mit geringen Kosten herstellbar ist, durch hervorragendes Adhäsionsvermögen zu verschiedensten Substraten deren Verklebung ermöglicht und sich zugleich durch leichte Applikation auszeichnet.

Seitens der Anmelderin wurde nun überraschend gefunden, daß ein Schmelzblend aus Copolymeren auf Propylenbasis und copolymerisierbaren ethylenisch ungesättigten niederen aliphatischen Comonomeren mit mindestens einer Carboxylgruppe pro Molekül, als zweite Komponente Ethylen-Copolymere mit Acrylsäure und/oder deren Ester, und als weitere Komponente einem binären Copolymeren auf Ethylenbasis und/oder Copolyamid-Heißschmelzkleber mit einem Gehalt an disekundärem cyclischen Amin zu einer bemerkenswerten Verbesserung des Adhäsionsvermögens des Schmelzblends bei der Herstellung von Verbundteilen im Vergleich zu den nach dem Stand der Technik bekannten Klebstoffen führt. Zusätzlich wurde dabei überraschend gefunden, daß aus dem Heißschmelzkleber hergestellte Mono-Folien trotz eines Mehrkomponentenblends eine ausgezeichnete Homogenität besitzen. Als zusätzlicher Befund war überraschend, daß entgegen den Erfahrungen bei der Extrusion von Polypropylen das zuvor genannte Heißschmelzkleberblend problemlos sowohl im Flachfolien-, als auch im Blasfolien-Extrusionsverfahren verwendbar sind.

Die Aufgabe der Erfindung wurde durch die Bereitstellung eines Heißschmelzklebers enthaltend eine erstarrte Schmelze von Ethylen-Acrylsäure-Acrylester-Copolymeren und weiteren thermoplastischen Polymeren gelöst, wobei die Schmelze dadurch gekennzeichnet ist, daß sie erhältlich ist durch Verschmelzen folgender Komponenten:

A) 40 bis 80 Gew.-% Copolymere auf Propylen-Basis mit 95 bis 99,9 Gew.-% Propylen-Monomereinheiten und 0,1 bis 5 Gew.-% copolymerisierbaren ethylenisch ungesättigten niederen aliphatischen Comonomeren mit mindestens einer Carboxylgruppe pro Molekül, deren Ester oder Anhydride, gegebenenfalls als Schmelzblend mit bis zu 30 Gew.-%, bezogen auf das Schmelzblend, EPDM-Kautschuk oder Ethylen-Vinylacetat-Copolymer, mit folgenden physikalischen Eigenschaften:

| | |
|---|---|
| Dichte nach ASTM D 1505 | 0,9 bis 0,99 g/cm$^3$ |
| Melt-flow-Index ASTM D 1238 | 2 bis 11 g/10 min. |
| Schmelzbereich, ermittelt auf dem Schmelztischmikroskop | 150 bis 165°C |

B) 7,5 bis 50 Gew.-% Ethylen-Copolymere mit Acrylsäure und/oder deren Ester mit 0,1 bis 10 Gew.-% Acrylsäure und/oder deren Ester mit folgenden physikalischen Eigenschaften:

| | |
|---|---|
| Dichte nach ASTM D 1505 | 0,92 bis 0,95 g/cm$^3$ |
| Schmelzbereich nach ASTM E 28 | 95 bis 105°C |

und in einer Gesamtmenge von bis zu 50 Gew.-% mindestens eine der Komponenten

C) binäre Copolymere auf Ethylen-Basis, die umfassen Ethylen-Copolymere mit Vinylacetat mit einem Vinylacetatgehalt von 18 bis 40 Gew.-% mit folgenden physikalischen Eigenschaften:

| | |
|---|---|
| Dichte nach ASTM D 1505 | 0,93 bis 0,96 g/cm$^3$ |
| Schmelzbereich nach ASTM E 28 | 90 bis 110°C |
| DSC Maximum | 55 bis 90°C |

und

D) Copolyamide mit einem Gehalt von 10 bis 50 Gew.-% disekundäres zyklisches Diamin als polyamidbildende Amin-Monomerkomponente mit folgenden physikalischen Eigenschaften:

| Dichte nach DIN 53479 | 1,05 bis 1,15 g/cm$^3$ |
|---|---|
| Melt-flow-Index nach DIN 53735 | 3 bis 15 g/10 min |
| Schmelzbereich nach DIN 53736B | 110 bis 130 °C |

und anschließendem Erstarrenlassen dieser Schmelze.

Die erfindungsgemäßen Mengenbereiche der einzelnen Komponenten des Heißschmelzklebers ermöglichen dabei, daß das Eigenschaftprofil des Blends auf die zu verklebenden Substrate optimal eingestellt werden kann. So lassen sich bei Herstellung von z.B. Folien aus dem Heißschmelzkleber sowohl steife als auch elastische Folien herstellen. Ebenso läßt sich das Adhäsionsvermögen zu den zu verklebenden Substraten auf den gewünschten Wert einstellen. Auch die Temperaturwechselbeständigkeit der verklebten Verbundmaterialien ist beliebig auf einen optimalen Wert einzustellen.

Die in der vorliegenden Erfindung einsetzbare Komponente (A) sind Copolymere auf Propylenbasis mit 95 bis 99,9 Gew.-% Propylenmonomer-Einheiten, und 0,1 bis 5 Gew.-% copolymerisierbaren ethylenisch ungesättigten niederen aliphatischen Comonomeren mit mindestens einer Carboxylgruppe pro Molekül, deren Ester oder Anhydride, wobei dieses Copolymer beispielsweise durch Pfropfpolymerisation von ethylenisch ungesättigten niederen aliphatischen Comonomeren an Polypropylen herstellbar ist. Der Ausdruck "ethylenisch ungesättigte niedere aliphatische Comonomere mit mindestens einer Carboxylgruppe pro Molekül" steht beispielsweise für Acrylsäure, Methacrylsäure, Crotonsäure, Isocrotonsäure, Angelikasäure, Tiglinsäure, Maleinsäure, Fumarsäure, Maleinsäureanhydrid, Citraconsäure, Mesaconsäure, Itaconsäure, Aconitsäure und deren Anhydride. Unter Ester werden $C_1$-$C_6$-Alkanolester verstanden, bevorzugt sind Methyl, Ethyl, Propyl, i-Propyl, Butyl und i-Butylester.

Gegebenenfalls kann das zuvor genannte Copolymer auf Propylenbasis mit 95 bis 99,9 Gew.-% Propylenmonomer-Einheiten und 0,1 bis 5 Gew.-% des copolymerisierbaren ethylenisch ungesättigten niederen aliphatischen Comonomeren mit mindestens einer Carboxylgruppe pro Molekül oder deren Anhydride im Schmelzblend mit einem EPDM-Kautschuk oder Ethylen-Vinylacetat-Copolymer erfindungsgemäß als Komponente (A) verwendet werden, wobei im Schmelzblend bis zu 30 Gew.-% an EPDM-Kautschuk oder Ethylen-Vinylacetat-Copolymer vorliegen. Das Ethylen-Vinylacetat-Copolymer hat dabei bevorzugt einen Vinylacetat-Gehalt von 18 bis 30 Gew.-%. EPDM-Kautschuk bedeutet dabei bevorzugt ein Ethylen-Propylen-Polymethylenediene-Kautschuk. Die als Komponente (A) erfindungsgemäß verwendbaren Copolymere, gegebenenfalls als Schmelzblend, haben die physikalischen Eigenschaften, die in der entsprechenden Tabelle in Anspruch 1 aufgeführt sind.

Der Ausdruck DSC in den Tabellen bedeutet hierbei Differential Scanning Calorimetrie und stellt ein aus dem Stand der Technik bekanntes Meßverfahren dar.

Zur Verwendung als Komponente (A) sind verschiedene Produkte im Handel erhältlich. Beispielsweise werden hier genannt ein modifiziertes Polypropylen-Copolymer wie Orevac C, FT, F der Fa.ATOCHEM S.A., Admer QF 500 und 501 der Firma Mitsui, sowie Novatec der Firma Mitsubishi.

Das in der vorliegenden Erfindung als Komponente (B) eingesetzte Ethylen-Copolymer mit Acrylsäure und/oder deren Ester mit 0,1 bis 10 Gew.-% Acrylsäure und/oder deren Ester weist eine Dichte von 0,82 bis 0,95 g/cm$^3$ und einen Schmelzbereich von 95 bis 105 °C auf, wobei beide Messwertbereiche unter ASTM-Bedingungen bestimmt wurden. Diese Ethylen-Copolymeren mit Acrylsäure und/oder deren Ester, wobei hierunter die gleichen Alkanolester wie oben verstanden werden, sind bekannt und von den auf den Markt erhältlichen Produkten sind die unter dem Warenzeichen Lucalen von der BASF vertriebenen Produkte beispielsweise bei der Herstellung des erfindungsgemäßen Schmelzblend einsetzbar. Beispielhaft werden hier genannt Lucalen A 2710 H, A 2910 M, A 2920 M und A3710 MX der BASF.

Die erfindungsgemäß einsetzbare Komponente (C) sind binäre Copolymere auf Ethylenbasis, die Ethylen-Copolymere mit Vinylacetat mit einem Vinylacetatgehalt von 18 bis 40 Gew.-% enthalten. Um als Komponente (C) erfindungsgemäß verwendet werden zu können, müssen die zuvor genannten Ethylen-Copolymere mit Vinylacetat die in der Tabelle im Anspruch genannten physikalischen Eigenschaften besitzen. Als erfindungsgemäß verwendbare Komponente (C) können verschiedene auf dem Markt erhältliche Produkte eingesetzt werden, beispielhaft werden genannt Evatane 28-05, Evatane 40-55, Orevac 18-150 der Atochem S.A.

Als erfindungsgemäß verwendbare Komponente (D) werden Copolyamide mit einem Gehalt von 10 bis 40 Gew.-% disekundäres zyklisches Amin als polyamidbildende Amin-Monomorkomponente sowie die komplementäre polyamidbildende Säurekomponente in einer Menge von 90 bis 60 Gew.-% eingesetzt, wobei die Copolyamide die in der Tabelle im Anspruch gegebenen physikalischen Eigenschaften besitzen. Es sind verschiedene auf dem Markt erhältliche Copolyamide als erfindungsgemäß verwendbare Komponente (D) einsetzbar. Beispielhaft wird hier der Polyamidheißschmelzkleber Platamid M 1276 der Deutschen ATOCHEM Werke genannt.

Gegebenenfalls kann in den erfindungsgemäßen Heißschmelzkleber-Zusammensetzungenals weitere Komponente (E) in einer Menge von 0,1 bis zu 40 Gew.-% ein Terpolymer, enthaltend als Monomereinheiten Ethylen, Vinylacetat und copolymerisierbare ethylenisch ungesättigte niedere aliphatische Comonomere mit mindestens einer Carboxylgruppe pro Molekül, deren Anhydride oder Ester; wobei die Ethyleneinheiten in einer Menge von 65 bis 90 Gew.-%, die Vinylacetateinheiten in einer Menge von 5 bis 30 Gew.-% und Comonomeren mit mindestens einer Carboxylgruppe pro Molekül, deren Anhydride oder Ester in einer Menge von 0,1 bis 5 Gew.-% bezogen auf das Gesamtgewicht des Terpolymeren vorliegen, enthalten sein. Unter ethylenisch ungesättigten niederen aliphatischen Comonomeren werden die gleichen Comonomeren wie bei Komponente (A) genannt verstanden. Der Ausdruck "Ester" steht für niedere $C_1$-$C_6$-Alkanolreste, die z.B. die oben genannte Bedeutung haben. Das erfindungsgemäß als gegebenenfalls einsetzbare Komponente (E) verwendbare Terpolymer muß die folgenden physikalischen Eigenschaften besitzen:

| Dichte nach ASTM D 1505 | 0,926 bis 0,950 g/cm³ |
| Schmelzbereich nach DIN 53736B | 86 bis 98°C |
| Schmelzbereich nach ASTM D 1525 | 60 bis 85°C |

Es sind verschiedene auf dem Markt erhältliche Produkte als Komponente (E) einsetzbar. Beispielhaft werden genannt Orevac 9307, Orevac 18211, Orevac 9309 und Orevac 9318 der Atochem S.A. Bei den o.g. Heißschmelzkleber-Zusammensetzungen gemäß der vorliegenden Erfindung sind beispielsweise 40 bis 60 Gew.-% der Komponente (A), 7,5 bis 40 Gew.-% der Komponente (B), und in einer Gesamtmenge von bis zu 30 Gew-% mindestens eine der Komponenten (C) und (D) bevorzugt. Ein mit Hilfe der erfindungsgemäßen Zusammensetzung verklebtes Verbundmaterial zeichnet sich durch hervorragende Klebefestigkeit über einen breiten Temperaturbereich und dauerhafte Beständigkeit gegenüber verschiedenen Lösungsmitteln aus. Zusätzliche Vorteile der erfindungsgemäßen Zusammensetzung sind deren hervorragende Homogenität und die leichte Herstellbarkeit der daraus hergestellten Folien, die bevorzugt Monofolien sind.

Zusätzlich zu den zuvor genannten Komponenten kann eine Vielzahl verschiedener Compoundiermittel, wie sie gewöhnlich in Schmelzklebern verwendet werden, in solchen Mengen in die Zusammensetzung gemäß der vorliegenden Erfindung eingearbeitet werden, daß der durch die vorliegende Erfindung erzielte Effekt nicht beeinträchtigt wird. Zu derartigen Compoundiermitteln zählen beispielsweise anorganische Stoffe wie Talkum, Calciumsilikat, Zinkweiß und Titandioxyd und verschiedene Klebrigmacher, Wachse, Antioxidationsmittel, Antialterungsmittel, Ultraviolettabsorber und Stabilisatoren zur Verwendung in gebräuchlichen Schmelzklebern.

Die Klebstoffzusammensetzung gemäß der vorliegenden Erfindung kann in Form einer pulvrigen Mischung, einer wässrigen Dispersion, einer Folie, Mono-oder Multifilen vorliegen, wird jedoch normalerweise nach dem Vermischen der Komponenten in der Schmelze und anschließendem Ausformen der Mischung zu Pellets, Tabletten, Platten, Folien usw. zur Anwendung gebracht. Dabei ist die Verwendung in Folienform besonders bevorzugt, wobei die Folie zwischen die zu verklebenden Materialien gebracht wird und diese unter Hitze und Druckeinwirkung miteinander verklebt werden. GMPP, bzw. HMPP, bedeutetet dabei Glasmehl gefülltes, bzw. Holzmehl gefülltes Polypropylen.

Die Heißschmelzkleber-Zusammensetzungen gemäß der vorliegenden Erfindung zeigt eine hervorragende Klebefestigkeit gegenüber einer Vielzahl von Materialien. Dabei können sowohl unterschiedliche organische Polymer-Materialien wie Polypropylen, das gefüllt als 6MPP oder HMPP als auch ungefüllt sein kann, Polyethylen, Polyvinylidenchloride, Polyurethan, das als Formteil, als auch geschäumt eingesetzt werden kann, als auch Metalle wie z.B. Eisen, Aluminium, Kupfer, Blei, Zink etc., und textile Materialien verklebt werden.

Zum Verkleben von PVC mit anderen Materialien eignen sich besonders Heißschmelzkleber-Zusammensetzungen gemäß der vorliegenden Erfindung, die einen Gehalt an Polyamidkomponente (D) aufweisen.

Die vorliegende Erfindung wird durch die folgenden Beispiele näher erläutert.

Beispiel 1

In einem handelsüblichen Granulatmischer wurden:
40 kg Copolymer Orevac PP-C (Atochem)
30 kg Polyamid Heißschmelzkleber Platamid M 1276 (Deutsche ATOCHEM Werke)
30 kg Ethylen aus Polymer Lucalen A 2710 H (BASF)
innerhalb von 15 Minuten gründlich gemischt.

Die trockene Granulatmischung wird auf einer handelsüblichen Blasfolienanlage unter folgenden Bedingungen zu einem Monoschlauch extrudiert.

| | |
|---|---|
| Schnecke: | 3-Zonenschnecke mit einer Kompression von 1:3,5 |
| Schneckendrehzahl: | 22 UPM |
| Düsentemperatur: | 215 bis 220°C |
| Massedruck vor Düse: | 50 bar |
| Ausstoßleistung: | 10 kg/10 Std. |
| Abzugsgeschwindigkeit: | 4,5 mm/Min |
| Düse Durchmesser: | 150 mm/Min, Spalt 1 mm |

Die resultierende Folie mit einer Wandstärke von 0,050 mm wurde anschließend auf ihre Adhäsion zu den unterschiedlichen Substraten geprüft. Dazu wurden auf 130°C vorgewärmte Substratzuschnitte mittels auf Substratgröße zugeschnittener Folienstücke auf einer handelsüblichen Schwenkarmbügelpresse (Kannegiesser XVO B15) innerhalb von 15 Sek bei 160 bis 180°C und 0,4 bar verklebt.

Die Verbundprüfung erfolgte nach 24-stündiger Lagerung im Normklima. Die Ergebnisse der Prüfung sind in der den Beispielen folgenden Tabelle aufgeführt.

Beispiel 2

In einem handelsüblichen Granulatmischer wurden:
50 kg PP- Copolymer Orevac PP-F
30 kg Ethylenvinylacetat-Copolymer Orevac 18-150
20 kg Ethylenpolymer Lucalen A 2710H
innerhalb von 15 Minuten gründlich gemischt.
Die weiteren Verfahrensschritte sowie Applikation und Prüfung des Verbundmaterials entsprachen denen von Beispiel 1 sofern nichts anderes in der nachfolgenden Tabelle angegeben ist. Die Ergebnisse sind in der den Beispielen folgenden Tabelle aufgeführt.

Beispiel 3

In einem handelsüblichen Granulatmischer wurden:
60 kg Polypropylen-Copolymer Orevac PP-FT
20 kg Ethylenpolymer Lucalen A 3710 MX
20 kg Ethylenvinylacetat-Copolymer Evatane 40-55
innerhalb von 15 Minuten gründlich gemischt.
Die weiteren Verfahrensschritte sowie Applikation und Prüfung des Verbundmaterials entsprachen denen von Beispiel 1 sofern nichts anderes in der nachfolgenden Tabelle angegeben ist. Die Ergebnisse sind in der den Beispielen folgenden Tabelle aufgeführt.

Beispiel 4

In einem handelsüblichen Granulatmischer wurden:
50 kg Polypropylen-Copolymer Orevac PPC
10 kg Polyamidheißschmelzkleber Platamid M 1276
20 kg Ethylencopolymer Lucalen A 2710 H
20 kg Ethylencopolymer Lucalen A 3710 MX
innerhalb von 15 Minuten gründlich gemischt.
Die weiteren Verfahrensschritte sowie Applikation und Prüfung des Verbundmaterials entsprachen denen von Beispiel 1 sofern nichts anderes in der nachfolgenden Tabelle angegeben ist. Die Ergebnisse sind in der den Beispielen folgenden Tabelle aufgeführt.

Beispiel 5

In einem handelsüblichen Granulatmischer wurden:
70 kg Polypropylen-Copolymer Orevac PP-C
15 kg Ethylen-Vinylacetat-Copolymer Orevac 18-150

6

15 kg Ethylencopolymer Lucalen A 2710 H

innerhalb von 15 Minuten gründlich gemischt.

Die weiteren Verfahrensschritte sowie Applikation und Prüfung des Verbundmaterials entsprachen denen von Beispiel 1 sofern nichts anderes in der nachfolgenden Tabelle angegeben ist. Die Ergebnisse sind in der den Beispielen folgenden Tabelle aufgeführt.

Beispiel 6

In einem handelsüblichen Granulatmischer wurden:

40 kg Polypropylen-Copolymer Orevac PP-C

45 kg Polyamidheißschmelzkleber Platamid M 1276

7,5 kg Ethylen-Vinylacetat-Copolymer Orevac 18-150

7,5 kg Ethylencopolymer Lucalen A 2920 M

innerhalb von 15 Minuten gründlich gemischt.

Die weiteren Verfahrensschritte sowie Applikation und Prüfung des Verbundmaterials entsprachen denen von Beispiel 1 sofern nichts anderes in der nachfolgenden Tabelle angegeben ist. Die Ergebnisse sind in der den Beispielen folgenden Tabelle aufgeführt.

Vergleichsbeispiel 1

Zum Vergleich wurde eine handelsübliche Einschichten-Folie aus einem mit Acrylsäure bzw. deren Ester stark modifizierten Propylencopolymer auf gleiche Weise appliziert und die Verbundmaterialien getestet. Es handelt sich hierbei um eine Monofolie der Xiro AG mit der Handelsbezeichnung XIRO XAF 2311. Die Ergebnisse der Prüfung der Verbundmaterialien sind in der Tabelle gezeigt.

Vergleichsbeispiel 2

Eine Zweischichten-Folie aus einem modifizierten Propylencopolymer als einer Schicht und einem Copolyamid als zweiter Schicht wurde auf gleiche Weise wie in den Beispielen 1 bis 4 appliziert. Als Zweischichten-Folie wurde eine Duplo-Folie XIRO V 301 der Xiro AG verwendet. Die Prüfung der Verbundmaterialien erfolgte wie bei den Beispielen 1 bis 4. Die Ergebnisse sind in der Tabelle gezeigt.

Vergleichsbeispiel 3

Zum Vergleich wurde eine Einschichten-Folie aus Orevac PP-C hergestellt und auf gleiche Weise wie in Vergleichsbeispiel 1 appliziert und die Verbundmaterialien getestet. Die Ergebnisse der Prüfung der Verbundmaterialien sind in der Tabelle gezeigt.

Vergleichsbeispiel 4

Zum Vergleich wurde eine Einschichten-Folie aus Orevac PP-F hergestellt und auf gleiche Weise wie in Vergleichsbeispiel 1 appliziert und die Verbundmaterialien getestet. Die Ergebnisse der Prüfung der Verbundmaterialien sind in der Tabelle gezeigt.

Vergleichsbeispiel 5

Zum Vergleich wurde eine Einschichten-Folie aus Lucalen A 2710 H hergestellt und auf gleiche Weise wie in Vergleichsbeispiel 1 appliziert und die Verbundmaterialien getestet. Die Ergebnisse der Prüfung der Verbundmaterialien sind in der Tabelle gezeigt.

Vergleichsbeispiel 6

Zum Vergleich wurde eine Einschichten-Folie aus Evatane 40-55 hergestellt und auf gleiche Weise wie in Vergleichsbeispiel 1 appliziert und die Verbundmaterialien getestet. Die Ergebnisse der Prüfung der Verbundmaterialien sind in der Tabelle gezeigt.

Vergleichsbeispiel 7

Auf gleiche Weise wie im Vergleichsbeispiel 1 wurde eine Einschichten-Folie aus einer Mischung von 80 kg Orevac PP-C und 20 kg Lucalen A 2710 H hergestellt und auf gleiche Weise appliziert und die Verbundmaterialien getestet. Die Ergebnisse der Prüfung der Verbundmaterialien sind in der Tabelle gezeigt.

Vergleichsbeispiel 8

Auf gleiche Weise wie im Vergleichsbeispiel 1 wurde eine Einschichtenfolie aus einer Mischung von 80 kg Orevac PP-FT und 20 kg Evatane 80-150 hergestellt und auf gleiche Weise appliziert und die Verbundmaterialien getestet. Die Ergebnisse der Prüfung der Verbundmaterialien sind in der Tabelle gezeigt.

Vergleichsbeispiel 9

Zum Vergleich wurde eine Einschichtenfolie aus Platamid M 1276 hergestellt und auf gleiche Weise wie in Vergleichsbeispiel 1 appliziert und die Verbundmaterialien getestet. Die Ergebnisse der Prüfung der Verbundmaterialien sind in der Tabelle gezeigt.

Vergleichsbeispiel 10

Wie in den Vergleichsbeispielen 7 und 8 beschrieben wurde versucht, aus einer Mischung von 50 % Lucalen A 2710 H und 50 % Evatane 18-150 eine Einschichtenfolie herzustellen. Die Herstellung der Folie war aufgrund der imhogenen Mischung nicht möglich.

Im Gegensatz zu der Mischung des Vergleichsbeispieles 10, die aufgrund ihrer Inhomogenität nicht zur Herstellung einer Folie geeignet war, ließen sich die Zusammensetzungen der Vergleichsbeispiele 3 bis 9 zu einer Folie verarbeiten. Jedoch zeigten diese Folien Anhäsionseigenschaften, die bestimmten Materialien gegenüber ungenügend waren. Darüberhinaus zeigte die Folie, die entsprechend dem Vergleichsbeispiel 6 hergestellt worden war, eine sehr starke Blockneigung und blieb während des Fabrikationsprozesses an den Transportrollen haften.

Die in der Tabelle gezeigten Ergebnisse der Verbundmaterialienprüfung zeigt die überragenden Klebeeigenschaften der erfindungsgemäßen Heißschmelzkleber-Zusammensetzungen. Demgegenüber zeigen die in den Vergleichsbeispielen verwendeten Folien nach dem Stand der Technik nur gegenüber bestimmten zu verklebenden Materialien gute Adhäsionseigenschaften. Die Adhäsionseigenschaften der erfindungsgemäßen Heißschmelzkleber-Zusammensetzungen sind gegenüber allen verwendeten Materialien ausgezeichnet und unter den Testbedingungen findet keine Substratzerstörung statt.

Die in der nachfolgenden Tabelle aufgeführten Beurteilungen der Adhäsionseigenschaften sind wie folgt zu verstehen:

1 = Substratzerstörung
2 = teilweise Substratzerstörung
3 = teilweise adhäsiver Bruch
4 = adhäsiver Bruch
5 = keine Adhäsion zu einem der beiden Substrate

Die in der Tabelle verwendeten Abkürzungen für die verklebten Substratmaterialien sind im folgenden erläutert:

PE       Polyethylen
PP       Polypropylen
PVDF       Polyvinylidenfluorid
PU       Polyurethan
ALU       Aluminium
Textil       textiles Material.

| Prod. | Fol. Stärke μm | Applik. Thermo-kasch. bei | PP PP | PE PE | PP PE | PVDF PP | PU PP | PU PE | ALU PP | ALU PVDF | PP TEXTIL | PVC ALU | PVC PP | |
|---|---|---|---|---|---|---|---|---|---|---|---|---|---|---|
| Beisp. 1 | 50 | 170 ° | 2 | 2 | 2 | 2 | 1-2 | 1-2 | 2 | 2 | 1-2 | 1 | 1 | Einz.-Temp. 160-165$^o$C/Düse 215-220$^o$C/3 Zonen Schnecke |
| 2 | " | " | 1 | 1 | 1 | 1-2 | 2 | 2 | 1 | 2 | 1 | 2-3 | 2-3 | Einz.-Temp. 170-175$^o$C/Düse 215-220$^o$C/5 Zonen Schnecke |
| 3 | " | " | 1 | 1 | 1 | 1-2 | 2 | 2 | 1 | 2 | 1 | 2-3 | 2-3 | wie Beisp. 2 |
| 4 | " | " | 1-2 | 1-2 | 1-2 | 1-2 | 1 | 1 | 1-2 | 1-2 | 1 | 1-2 | 1-2 | wie Beisp. 1 |
| 5 | " | " | 1 | 1 | 1 | 1-2 | 1-2 | 1-2 | 1 | 1-2 | 1 | 2-3 | 2-3 | wie Beisp. 2 |
| 6 | " | " | 1-2 | 1-2 | 1-2 | 1-2 | 1 | 1-2 | 1-2 | 1-2 | 1-2 | 1 | 1 | wie Beisp. 1 |
| Vergl. Beisp. 1 | " | " | 2 | 2 | 2 | 4 | 5 | 5 | 4 | 5 | 3 | 5 | 5 | / |
| 2 | | | 5 | 5 | 5 | 5 | 2-3 | 2-3 | 4 | 5 | 2-3 | 2-3 | 2-3 | / |
| 3 | " | " | 2 | 2 | 2 | 4 | 5 | 5 | 4 | 5 | 3 | 5 | 5 | Einz.-Temp. 150$^o$C/Düse 190-210$^o$C/3 Zonen Schnecke |
| 4 | " | " | 2 | 2 | 2 | 4 | 5 | 5 | 4 | 5 | 3 | 5 | 5 | Einz.-Temp. 150$^o$C/Düse 190-210$^o$C/3 Zonen Schnecke |
| 5 | " | " | 5 | 5 | 5 | 5 | 4 | 4 | 5 | 5 | 4 | 5 | 5 | Einz.-Temp. 150$^o$C/Düse 110-120$^o$C/3 Zonen Schnecke |
| 6 | " | " | 5 | 5 | 5 | 5 | 4 | 3-4 | 5 | 5 | 4 | 5 | 5 | Einz.-Temp. 150$^o$C/Düse 110-120$^o$C/3 Zonen Schnecke |

EP 0 388 716 B1

| Prod. | Fol. Stärke μm | Applik. Thermo- kasch. bei | PP PP | PE PE | PP PE | PVDF PP | PU PP | PU PE | ALU PP | ALU PVDF | PP TEXTIL | PVC ALU | PVC PP | |
|---|---|---|---|---|---|---|---|---|---|---|---|---|---|---|
| Vergl. Beisp. 7 | 50 | 170° | 3-4 | 3 | 3-4 | 4 | 3 | 3 | 3-4 | 4 | 3-4 | 4 | 4 | Einz.-Temp. 150-160°C /Düse 190-210°C/3 Zonen Schnecke |
| 8 | " | " | 3-4 | 3 | 3-4 | 4 | 3 | 3 | 3-4 | 4 | 3-4 | 4 | 4 | Einz.-Temp. 150°C/Düse 190-210°C/3 Zonen Schnecke |
| 9 | " | " | 5 | 5 | 5 | 5 | 4 | 4 | 5 | 5 | 4 | 2 | 4-5 | Einz.-Temp. 120°C/Düse 160-200°C/3 Zonen Schnecke |
| 10 | " | " | ı | ı | ı | ı | ı | ı | ı | ı | ı | ı | ı | |

## Patentansprüche

**1.** Heißschmelzkleber enthaltend eine erstarrte Schmelze von Ethylen-Acrylsäure-Acrylester-Copolymeren und weiteren thermoplastischen Polymeren,
**dadurch gekennzeichnet,**

10

daß sie erhältlich ist durch Verschmelzen folgender Komponenten:

A) 40 bis 80 Gew.-% Copolymere auf Propylen-Basis mit 95 bis 99,9 Gew.-% Propylen-Monomereinheiten und 0,1 bis 5 Gew.-% copolymerisierbaren ethylenisch ungesättigten niederen aliphatischen Comonomeren mit mindestens einer Carboxylgruppe pro Molekül, deren Ester oder Anhydride gegebenenfalls als Schmelzblend mit bis zu 30 Gew.-%, bezogen auf das Schmelzblend, EPDM-Kautschuk oder Ethylen-Vinylacetat-Copolymer, mit folgenden physikalischen Eigenschaften:

| Dichte nach ASTM D 1505 | 0,9 bis 0,99 g/cm$^3$ |
|---|---|
| Melt-flow-Index ASTM D 1238 | 2 bis 11 g/10 Min. |
| Schmelzbereich, ermittelt auf dem Schmelztischmikroskop | 150 bis 165 °C |

B) 7,5 bis 50 Gew.-% Ethylen-Copolymere mit Acrylsäure und/oder deren Ester mit 0,1 bis 10 Gew.-% Acrylsäure und/oder deren Ester mit folgenden physikalischen Eigenschaften:

| Dichte nach ASTM D 1505 | 0,92 bis 0,95 g/cm$^3$ |
|---|---|
| Schmelzbereich nach ASTM E 28 | 95 bis 105 °C |

und in einer Gesamtmenge von bis zu 50 Gew.-% mindestens einer der Komponenten

C) binäre Copolymere auf Ethylen-Basis, die umfassen Ethylen-Copolymere mit Vinylacetat mit einem Vinylacetatgehalt von 18 bis bis 40 Gew.-% mit folgenden physikalischen Eigenschaften:

| Dichte nach ASTM D 1505 | 0,93 bis 0,96 g/cm$^3$ |
|---|---|
| Schmelzbereich nach ASTM E 28 | 90 bis 110 °C |
| DSC Maximum | 55 bis 90 °C |

und

D) Copolyamide mit einem Gehalt von 10 bis 50 Gew.-% disekundäres zyklisches Diamin als polyamidbildende Amin-Monomerkomponente mit folgenden physikalischen Eigenschaften:

| Dichte nach DIN 53479 | 1,05 bis 1,15 g/cm$^3$ |
|---|---|
| Melt-flow-Index nach DIN 53735 | 3 bis 15 g/10 Min. |
| Schmelzbereich nach DIN 53736B | 110 bis 130 °C |

und anschließendem Erstarrenlassen dieser Schmelze.

2. Heißschmelzkleber nach Anspruch 1, dadurch gekennzeichnet, daß die Schmelze gegebenenfalls enthält:

E) 0,1 bis 40 Gew.-% Terpolymer enthaltend als Monomereinheiten Ethylen, Vinylacetat und copolymerisierbare ethylenisch ungesättigte niedere aliphatische Comonomere mit mindestens einer Carboxylgruppe pro Molekül, deren Anhydride oder Ester, wobei die Ethyleneinheiten in einer Menge von 65 bis 90 Gew.-%, die Vinylacetateinheiten in einer Menge von 5 bis 30 Gew.-% und die Comonomeren mit mindestens einer Carboxylgruppe pro Molekül, deren Anhydride oder Ester in einer Menge von 0,1 bis 5 Gew.-%, bezogen auf das Gesamtgewicht des Terpolymeren vorliegen, mit folgenden physikalischen Eigenschaften:

| Dichte nach ASTM D 1505 | 0,926 bis 0,950 g/cm$^3$ |
|---|---|
| Schmelzbereich nach DIN 53736B | 86 bis 98 °C |
| Schmelzbereich nach ASTM D 1525 | 60 bis 85 °C |

3. Heißschmelzkleber nach Anspruch 1 oder 2, dadurch gekennzeichnet, daß er in Form einer Folie vorliegt.

**4.** Heißschmelzkleber nach Anspruch 1 oder 2, dadurch gekennzeichnet, daß er in Form eines Pulvers oder einer wässrigen Dispersion vorliegt.

**5.** Heißschmelzkleber nach Anspruch 1 oder 2, dadurch gekennzeichnet, daß er in Form Mono- oder Multifilen vorliegt.

**6.** Verwendung des Heißschmelzklebers nach Anspruch 1 oder 2 zum Verkleben von Substraten aus Olefin-Polymeren, insbesondere Propylen-Polymeren mit sich oder mit anderen Substraten.

**7.** Verwendung des Heißschmelzklebers nach Anspruch 1 oder 2 zum Verkleben von Substraten aus PVC mit anderen Substraten.

**Claims**

**1.** Hot-melt adhesive containing a solidified melt of ethylene-acrylic acid-acrylic ester copolymers and further thermoplastic polymers,
**characterised in that**,
it is obtainable by melting together the following components:
  A) 40 to 80 wt.% of propylene-based copolymers with 95 to 99.9 wt.% of propylene monomer units and 0.1 to 5 wt.% of copolymerisable ethylenically unsaturated lower aliphatic comonomers with at least one carboxyl group per molecule, the esters or anhydrides thereof optionally as a melt blend with up to 30 wt.%, related to the melt blend, of EPDM rubber or ethylene-vinyl acetate copolymer with the following physical properties:

| | |
|---|---|
| Density to ASTM D 1505 | 0.9 to 0.99 g/cm$^3$ |
| Melt flow index ASTM D 1238 | 2 to 11 g/10 min |
| Melting range, determined on hot-stage microscope | 150 to 165 °C |

  B) 7.5 to 50 wt.% of ethylene copolymers with acrylic acid and/or the esters thereof with 0.1 to 10 wt.% of acrylic acid and/or the esters thereof with the following physical properties:

| | |
|---|---|
| Density to ASTM D 1505 | 0.92 to 0.95 g/cm$^3$ |
| Melting range to ASTM E 28 | 95 to 105 °C |

and in a total quantity of up to 50 wt.% of at least one of the components
  C) ethylene-based binary copolymers including copolymers of ethylene with vinyl acetate with a vinyl acetate content of 18 to 40 wt.% with the following physical properties:

| | |
|---|---|
| Density to ASTM D 1505 | 0.93 to 0.96 g/cm$^3$ |
| Melting range to ASTM E 28 | 90 to 110 °C |
| DSC maximum | 55 to 90 °C |

and
  D) copolyamides containing 10 to 50 wt.% of disecondary cyclic diamine as the polyamide-forming amine monomer component with the following physical properties:

| | |
|---|---|
| Density to DIN 53479 | 1.05 to 1.15 g/cm$^3$ |
| Melt flow index to DIN 53735 | 3 to 15 g/10 min |
| Melting range to DIN 53736B | 110 to 130 °C |

and subsequent solidification of this melt.

**2.** Hot-melt adhesive according to claim 1, characterised in that the melt also contains:

E) 0.1 to 40 wt.% of terpolymer containing as monomer units ethylene, vinyl acetate and copolymerisable ethylenically unsaturated lower aliphatic comonomers with at least one carboxyl group per molecule, the anhydrides or esters thereof, wherein the ethylene units are present in a quantity of 65 to 90 wt.%, the vinyl acetate units in a quantity of 5 to 30 wt.% and the comonomers with at least one carboxyl group per molecule, the anhydrides or esters thereof in a quantity of 0.1 to 5 wt.%, related to the total weight of the terpolymer, with the following physical properties:

| | |
|---|---|
| Density to ASTM D 1505 | 0.926 to 0.950 g/cm$^3$ |
| Melting range to DIN 53736B | 86 to 98 °C |
| Melting range to ASTM D 1525 | 60 to 85 °C |

3. Hot-melt adhesive according to claim 1 or 2, characterised in that it is in the form of a film.

4. Hot-melt adhesive according to claim 1 or 2, characterised in that it is in the form of a powder or an aqueous dispersion.

5. Hot-melt adhesive according to claim 1 or 2, characterised in that it is in the form of monofilaments or multifilaments.

6. Use of the hot-melt adhesive according to claim 1 or 2 for bonding substrates made from olefin polymers, in particular propylene polymers to themselves or to other substrates.

7. Use of the hot-melt adhesive according to claim 1 or 2 for bonding PVC substrates to other substrates.

**Revendications**

1. Adhésif fusionnant à chaud contenant une masse fondue solidifiée de copolymères éthylène - acide acrylique - esters acryliques et d'autres polymères thermoplastiques,
caractérisé en ce qu'il est obtenu par fusion des composants suivants :
A) 40 à 80 % en poids de copolymères à base de propylène contenant 95 à 99,9 % en poids d'unités monomères propylène et 0,1 à 5 % en poids de comonomères aliphatiques inférieurs éthyléniquement insaturés copolymérisables, contenant au moins un groupe carboxyle par molécule, ses esters ou anhydrides éventuellement sous forme de mélange fondu contenant jusqu'à 30 % en poids, rapporté au mélange fondu, de caoutchouc EPDM ou d'un copolymère éthylène-acétate de vinyle, présentant les propriétés physiques suivantes :
Densité selon ASTM D 1505 : 0,9 à 0,99 g/cm$^3$,
Indice de fusion (Melt-flow-Index) selon ASTM D 1238 : 2 à 11 g/10 mn.
Zone de fusion, déterminée par la méthode de la plaque chauffante sous microscope : 150 à 165 °C,
B) 7,5 à 50 % en poids de copolymères de l'éthylène avec l'acide acrylique et/ou avec ses esters contenant 0,1 à 10 % en poids d'acide acrylique et/ou de ses esters, présentant les propriétés physiques suivantes :
Densité selon ASTM D 1505 : 0,92 à 0,95 g/cm$^3$,
Zone de fusion selon ASTM E 28 : 95 à 105 °C,
et pour une quantité totale allant jusqu'à 50 % en poids, au moins l'un de ces composants :
C) des copolymères binaires à base d'éthylène, comprenant des copolymères de l'éthylène avec l'acétate de vinyle ayant une teneur en acétate de vinyle allant de 18 à 40 % en poids, présentant les propriétés physiques suivantes :
Densité selon ASTM D 1505 : 0,93 à 0,96 g/cm$^3$,
Zone de fusion selon ASTM E 28 : 90 à 110 °C,
DSC maximum : 55 à 90 °C, et
D) des copolyamides ayant une teneur allant de 10 à 50 % en poids d'une diamine cyclique disecondaire comme composant monomère amine formant des polyamides, présentant les propriétés physiques suivantes :
Densité selon DIN 53479 : 1,05 à 1,15 g/cm$^3$,
Indice de fusion (Melt-flow-Index) selon DIN 53735 : 3 à 15 g/10 mn.,

Zone de fusion selon DIN 53736B : 110 à 130°C, et
solidification subséquente de cette masse fondue.

2. Adhésif fusionnant à chaud selon la revendication **1**, caractérisé en ce que la masse fondue contient éventuellement :

**E**) 0,1 à 40 % en poids d'un terpolymère contenant comme unités monomères l'éthylène, l'acétate de vinyle et des comonomères aliphatiques inférieurs éthyléniquement insaturés copolymérisables, ayant au moins un groupe carboxyle par molécule, ses anhydrides ou esters, les unités éthylène étant présentes en une quantité allant de 65 à 90 % en poids, les unités acétate de vinyle en une quantité allant de 5 à 30 % en poids et les comonomères ayant au moins un groupe carboxyle par molécule, ses anhydrides ou esters en une quantité allant de 0,1 à 5 % en poids, rapporté au poids total du terpolymère, présentant les propriétés physiques suivantes :

Densité selon ASTM D 1505 : 0,926 à 0,950 g/cm$^3$,
Zone de fusion selon DIN 53736B : 86 à 98°C,
Zone de fusion selon ASTM D 1525 : 60 à 85°C.

3. Adhésif fusionnant à chaud selon la revendication **1** ou **2**, caractérisé en ce qu'il se présente sous la forme d'une feuille.

4. Adhésif fusionnant à chaud selon la revendication **1** ou **2**, caractérisé en ce qu'il se présente sous la forme d'une poudre ou d'une dispersion aqueuse.

5. Adhésif fusionnant à chaud selon la revendication **1** ou **2**, caractérisé en ce qu'il se présente sous la forme de mono- ou multifilament(s).

6. Utilisation de l'adhésif fusionnant à chaud selon la revendication **1** ou **2** pour coller des substrats en polymères oléfiniques, en particulier en polymères du propylène entre eux ou avec d'autres substrats.

7. Utilisation de l'adhésif fusionnant à chaud selon la revendication **1** ou **2** pour coller des substrats en PVC avec d'autres substrats.

14